# EUROPEAN PATENT APPLICATION

(11) **EP 4 693 810 A1**
(43) Date of publication of application: **11.02.2026**
(21) Application number: 24193892.7
(22) Date of filing: 09.08.2024
(51) Int. Cl.: H02J 7/02, B60L 53/122, H02J 50/00

(54) **CHARGER FOR ELECTRIC VEHICLES**

(71) Applicant: Siemens Aktiengesellschaft, 80333 München (DE)
(72) Inventor: Pavlovsky, Martin, 81675 München (DE); Percebon, Leandro, 81927 München (DE)
(74) Representative: Siemens Patent Attorneys

(57) **Abstract**

The invention relates to a charger (1) configured to charge batteries of electric vehicles. The charger (1) comprises charging electronics (17) which are switchable between a first operation modus and a second operation modus. In the first operation modus, the charging electronics (17) convert an alternating supply voltage (US) into a direct charging voltage (UD) of an adjustable voltage level to charge a battery of an electric vehicle by means of a cable (7). In the second operation modus, the charging electronics (17) convert the alternating supply voltage (US) into an alternating charging voltage (UA) of an adjustable voltage level and an adjustable or fixed frequency to wirelessly charge a battery of an electric vehicle by means of an induction coil (12).

## Description

The invention relates to a charger configured to charge batteries of electric vehicles.

Currently a battery of an electric vehicle is mostly (re-) charged by connecting the electric vehicle via a cable to an electrical power supply. However, besides this wired charging there is also the possibility of wireless charging the battery of an electric vehicle. Wireless charging is also known as inductive charging or cordless charging. It uses electromagnetic induction to transfer power from a primary induction coil outside the electric vehicle to a secondary induction coil of the electric vehicle. An alternating electric current flowing in the primary induction coil creates a fluctuating magnetic field which induces an alternating electric current in the secondary induction coil. The alternating current induced in the secondary induction coil is rectified to a direct current which is used to charge the battery of the electric vehicle. It is expected that wired chargers and wireless chargers will coexist in the future.

It is an object of the present invention to provide a charger for electric vehicles which enables both wired and wireless charging.

According to the invention the object is solved by a charger with the features of claim 1.

Advantageous embodiments of the invention are the subject of the dependent claims.

According to the invention, a charger configured to charge batteries of electric vehicles comprises
- charging electronics which are switchable between a first operation modus and a second operation modus, wherein
- in the first operation modus, the charging electronics convert an alternating supply voltage into a direct charging voltage of an adjustable voltage level to charge a battery of an electric vehicle by means of a cable, and
- in the second operation modus, the charging electronics convert the alternating supply voltage into an alternating charging voltage of an adjustable voltage level and an adjustable or fixed frequency to wirelessly charge a battery of an electric vehicle by means of an induction coil.

Here and below the term "direct voltage", often denoted by "DC-voltage", is used for a voltage providing a direct electric current, and the term "alternating voltage", often denoted by "AC-voltage", is used for a voltage providing an alternating electric current.

Hence, a charger according to the invention might be called a "hybrid charger" as it provides two operation modi for charging electric vehicles (more precisely, for charging batteries of electric vehicles): a first operation modus for charging an electric vehicle by a wired connection via a cable, and a second operation modus for charging an electric vehicle wirelessly by electromagnetic induction via an induction coil. The invention only concerns the charger outside the car but not the charging devices of the car itself.

In an embodiment of the invention, the charging electronics comprise a first charger unit and a second charger unit, wherein
- the first charger unit, in the first operation modus, converts the alternating supply voltage into the direct charging voltage, and, in the second operation modus, converts the alternating supply voltage into a direct intermediate voltage used to power the second charger unit, and
- the second charger unit, in the second operation modus, converts the direct intermediate voltage into the alternating charging voltage.

Hence, in the first operation modus, the first charger unit provides a direct charging voltage for wired charging of an electric vehicle, whereas, in the second operation modus, the first charger unit provides a direct intermediate voltage which the second charger unit converts to the alternating charging voltage used for wireless charging of an electric vehicle. In particular, this makes it possible to upgrade a charger only having a first charger unit to a charger additionally having a second charger unit.

In a further embodiment of the invention, the first charger unit comprises
- a first electric circuit which receives the alternating supply voltage, and
- a second electric circuit which, in the first operation modus, outputs the direct charging voltage and, in the second operation modus, outputs the direct intermediate voltage,
- wherein, in the first operation modus, the first electric circuit and the second electric circuit are galvanically isolated from each other.

Dividing the first charger unit into two electric circuits which, in the first operation modus, are galvanically isolated from each other provides a galvanic isolation of the alternating supply voltage from the direct charging voltage (in the first operation modus).

In a further embodiment of the invention, in the first operation modus, the first electric circuit and the second electric circuit are coupled by a transformer, and in the second operation modus, the first electric circuit and the second electric circuit are coupled by two relays which are closed in the second operation modus, thereby bypassing the transformer, and are open in the first operation modus.

In other words, the first charger unit comprises two relays and a transformer which can couple the first electric circuit and the second electric circuit. In the first operation modus, the relays are open and the first electric circuit and the second electric circuit are coupled by the transformer which galvanically isolates the first electric circuit and the second electric circuit from each other. In the second operation modus, the relays are closed and couple the first electric circuit and the second electric circuit, thereby bypassing the transformer. Hence, switching between the two operation modi comprises opening or closing the relays, wherein, in the first operation modus, the first electric circuit and the second electric circuit are galvanically isolated from each other by the transformer.

In a further embodiment of the invention, the first electric circuit comprises
- a first AC/DC converter which converts the alternating supply voltage into a first internal direct voltage,
- a first DC/AC converter which, in the first operation modus, converts the first internal direct voltage into a first internal alternating voltage, and, in the second operation modus, is bypassed by the two relays of the first charger unit, and
- a primary winding of the transformer which receives the first internal alternating voltage of the first DC/AC converter as a primary voltage of the transformer.

In a further embodiment of the invention, the second electric circuit comprises
- a secondary winding of the transformer which provides a secondary voltage of the transformer,
- a second AC/DC converter which, in the first operation modus, converts the secondary voltage of the transformer into a second internal direct voltage, and, in the second operation modus, is bypassed by the two relays of the first charger unit, and
- a DC/DC converter which, in the first operation modus, converts the second internal direct voltage into the direct charging voltage, and in the second operation modus, converts the first internal direct voltage into the direct intermediate voltage.

Hence, the first electric circuit comprises a first AC/DC converter which, in both operation modi, converts the alternating supply voltage into a first internal direct voltage. The first DC/AC converter and the second AC/DC converter only serve to use the transformer to galvanically isolate the first electric circuit and the second electric circuit from each other (in the first operation modus). The frequency of the first internal alternating voltage is preferably high in order to reduce the needed size of the transformer.

In a further embodiment of the invention, the second charger unit comprises
- a second DC/AC converter which, in the second operation modus, converts the direct intermediate voltage into a third internal alternating voltage,
- a matching network which creates a resonant frequency for the alternating charging voltage, and
- the induction coil which, in the second operation modus, receives the alternating charging voltage.

The second charger unit only operates in the second operation modus and, in this operation modus, converts the direct intermediate voltage provided by the first charger unit into the alternating charging voltage for the induction coil.

In a further embodiment of the invention, the first AC/DC converter, the first DC/AC converter, the second AC/DC converter, the DC/DC converter and/or the second DC/AC converter may comprise bridge circuits of semiconductor switches, respectively. This makes it possible to control the output voltages of these converters by controlling the semiconductor switches of these converters.

In a further embodiment of the invention, the charger comprises a control unit configured to control the charging electronics. In particular, the control unit may execute a computer program causing the charging electronics to switch between the first operation modus and the second operation modus. In the case that the various converters mentioned above comprise semiconductor switches, these semiconductor switches are controlled by the control unit.

The characteristics, features and advantages of this invention described above, as well as the manner in which these are achieved, will be more clearly and fully understood in connection with the following description of exemplary embodiments which will be explained in more detail in connection with the drawings, wherein
- Figure 1: shows a perspective view of an embodiment of a charger for electric vehicles,
- Figure 2: shows a circuit diagram of an embodiment of electronics of a charger for electric vehicles.

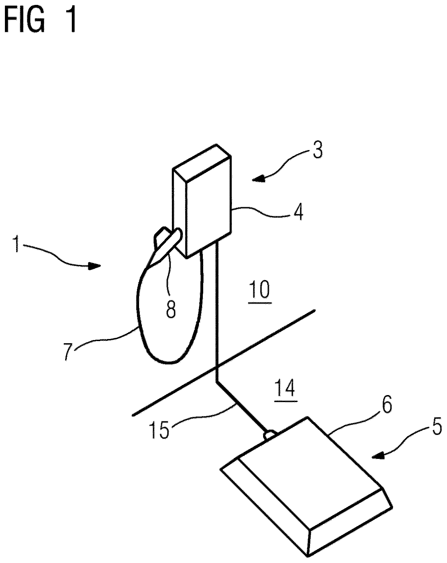

Figure 1 (FIG 1) shows a perspective view of an embodiment of a charger 1 for electric vehicles according to the invention. The charger 1 comprises a first charging module 3 and a second charging module 5.

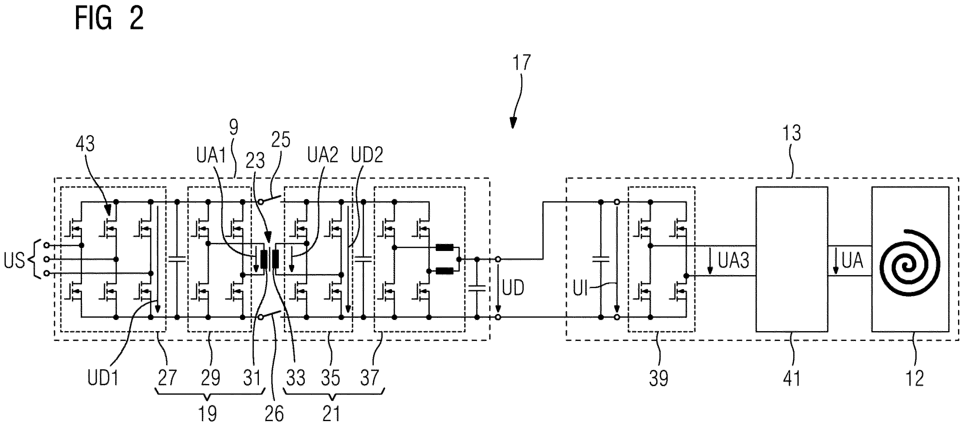

The first charging module 3 is configured to charge a battery of an electric vehicle via a cable 7 connectable to the electric vehicle. In the embodiment shown in figure 1 the first charging module 3 comprises a first box 4 inside of which a first charger unit 9 (cf. figure 2) is placed. The first box 4 may be mounted on a wall 10 or the like. One end of the cable 7 is connected to the first charger unit 9 inside the first box 4. The other end of the cable 7 is connected to a connector 8 which is connectable to an electric vehicle. The first charging module 3 may be cooled actively.

The second charging module 5 is configured to wirelessly charge a battery of an electric vehicle via an induction coil 12 (cf. figure 2). In the embodiment shown in figure 1 the second charging module 5 comprises a second box 6 inside of which a second charger unit 13 (cf. figure 2) is placed. The second box 6 may be mounted on a floor 14 to enable parking the electric vehicle such that an underside of the vehicle is located above the second box 6. The first charger unit 9 and the second charger unit 13 are electrically connected by a cable connection 15 between the first box 4 and the second box 6.

Figure 2 (FIG 2) shows a circuit diagram of an embodiment of charging electronics 17 of a charger 1 for electric vehicles according to the invention. The charging electronics 17 are switchable between a first operation modus and a second operation modus. In the first operation modus, the charging electronics 17 convert an alternating supply voltage US into a direct charging voltage UD of an adjustable voltage level to charge a battery of an electric vehicle by means of a cable 7. In the second operation modus, the charging electronics 17 convert the alternating supply voltage US into an alternating charging voltage UA of an adjustable voltage level and an adjustable or fixed frequency to wirelessly charge a battery of an electric vehicle by means of an induction coil 12.

The charging electronics 17 comprise a first charger unit 9 and a second charger unit 13. In the first operation modus, the first charger unit 9 converts the alternating supply voltage 'US into the direct charging voltage UD. In the second operation modus, the first charger unit 9 converts the alternating supply voltage 'US into a direct intermediate voltage Ul. The second charger unit 13, in the second operation modus, converts the direct intermediate voltage 'UI into the alternating charging voltage UA.

The first charger unit 9 comprises a first electric circuit 19 and a second electric circuit 21. The first electric circuit 19 receives the alternating supply voltage US. In the first operation modus, the second electric circuit 21 outputs the direct charging voltage UD. In the second operation modus, the second electric circuit 21 outputs the direct intermediate voltage UI which is used to power the second charger unit 13.

In the first operation modus, the first electric circuit 19 and the second electric circuit 21 are coupled by a transformer 23 which galvanically isolates the first electric circuit 19 and the second electric circuit 21 from each other. In the second operation modus, the first electric circuit 19 and the second electric circuit 21 are coupled by two relays 25, 26 which are closed in the second operation modus, thereby bypassing the transformer 23. In the first operation modus, the relays 25, 26 are open, as shown in figure 2.

The first electric circuit 19 comprises a first AC/DC converter 27, a first DC/AC converter 29 and a primary winding 31 of the transformer 23. The first AC/DC converter 27 converts the alternating supply voltage US into a first internal direct voltage UD1. In the first operation modus, the first DC/AC converter 29 converts the first internal direct voltage UD1 into a first internal alternating voltage UA1. In the second operation modus, the first DC/AC converter 29 is bypassed by the two relays 25, 26. In the first operation modus, the primary winding 31 of the transformer 23 receives the first internal alternating voltage UA1 of the first DC/AC converter 29. Hence, the first internal alternating voltage UA1 is a primary voltage of the transformer 23.

The second electric circuit 21 comprises a secondary winding 33 of the transformer 23, a second AC/DC converter 35 and a DC/DC converter 37. In the first operation modus, the secondary winding 33 of the transformer 23 provides a secondary voltage UA2 of the transformer 23 and the second AC/DC converter 35 converts the secondary voltage UA2 of the transformer 23 into a second internal direct voltage UD2. In the second operation modus, the second AC/DC converter 35 is bypassed by the two relays 25, 26. In the first operation modus, the DC/DC converter 37 converts the second internal direct voltage UD2 into the direct charging voltage UD. In the second operation modus, the DC/DC converter 37 converts the first internal direct voltage UD1 into the direct intermediate voltage UI.

The second charger unit 13 comprises a second DC/AC converter 39, a matching network 41 and the induction coil 12. The second charger unit 13 operates only in the second operation modus. The second DC/AC converter 39 converts the direct intermediate voltage UI into a third internal alternating voltage UA3. The matching network 41 creates a resonance frequency for the alternating charging voltage UA. The induction coil 12 receives the alternating charging voltage UA.

The first AC/DC converter 27, the first DC/AC converter 29, the second AC/DC converter 35, the DC/DC converter 37 and the second DC/AC converter 39 comprise bridge circuits of semiconductor switches 43, respectively. In the embodiment shown in figure 2, each semiconductor switch 43 is a metal-oxide-semiconductor field-effect transistor (MOSFET). However, in other embodiments other semiconductor switches 43 may be used.

Although the invention has been illustrated and described in detail by preferred embodiments, the invention is not limited by the examples disclosed and other variations may be derived therefrom by those skilled in the art without departing from the scope of the invention.

Independent of the grammatical term usage, individuals with male, female or other gender identities are included within the term.

## Claims

1. Charger (1) configured to charge batteries of electric vehicles, the charger (1) comprising
- charging electronics (17) which are switchable between a first operation modus and a second operation modus, wherein
- in the first operation modus, the charging electronics (17) convert an alternating supply voltage (US) into a direct charging voltage (UD) of an adjustable voltage level to charge a battery of an electric vehicle by means of a cable (7), and
- in the second operation modus, the charging electronics (17) convert the alternating supply voltage (US) into an alternating charging voltage (UA) of an adjustable voltage level and an adjustable or fixed frequency to wirelessly charge a battery of an electric vehicle by means of an induction coil (12).

2. Charger (1) according to claim 1, wherein the charging electronics (17) comprise a first charger unit (9) and a second charger unit (13), wherein
- the first charger unit (9), in the first operation modus, converts the alternating supply voltage (US) into the direct charging voltage (UD), and, in the second operation modus, converts the alternating supply voltage (US) into a direct intermediate voltage (Ul) used to power the second charger unit (13), and
- the second charger unit (13), in the second operation modus, converts the direct intermediate voltage (Ul) into the alternating charging voltage (UA).

3. Charger (1) according to claim 2, wherein the first charger unit (9) comprises
- a first electric circuit (19) which receives the alternating supply voltage (US), and
- a second electric circuit (21) which, in the first operation modus, outputs the direct charging voltage (UD) and, in the second operation modus, outputs the direct intermediate voltage (Ul),
- wherein, in the first operation modus, the first electric circuit (19) and the second electric circuit (21) are galvanically isolated from each other.

4. Charger (1) according to claim 3, wherein, in the first operation modus, the first electric circuit (19) and the second electric circuit (21) are coupled by a transformer (23) and, in the second operation modus, the first electric circuit (19) and the second electric circuit (21) are coupled by two relays (25, 26) which are closed in the second operation modus, thereby bypassing the transformer (23), and are open in the first operation modus.

5. Charger (1) according to claim 4, wherein the first electric circuit (19) comprises
- a first AC/DC converter (27) which converts the alternating supply voltage (US) into a first internal direct voltage (UD1),
- a first DC/AC converter (29) which, in the first operation modus, converts the first internal direct voltage (UD1) into a first internal alternating voltage (UA1), and, in the second operation modus, is bypassed by the two relays (25, 26) of the first charger unit (9), and
- a primary winding (31) of the transformer (23) which receives the first internal alternating voltage (UA1) of the first DC/AC converter (29) as a primary voltage of the transformer (23).

6. Charger (1) according to claim 5, wherein the first AC/DC converter (27) and the first DC/AC converter (29) comprise bridge circuits of semiconductor switches (43).

7. Charger (1) according to claim 4 or 5, wherein the second electric circuit (21) comprises
- a secondary winding (33) of the transformer (23) which provides a secondary voltage (UA2) of the transformer (23),
- a second AC/DC converter (35) which, in the first operation modus, converts the secondary voltage (UA2) of the transformer (23) into a second internal direct voltage (UD2), and, in the second operation modus, is bypassed by the two relays (25, 26) of the first charger unit (9), and
- a DC/DC converter (37) which, in the first operation modus, converts the second internal direct voltage (UD2) into the direct charging voltage (UD), and, in the second operation modus, converts the first internal direct voltage (UD1) into the direct intermediate voltage (Ul).

8. Charger (1) according to claim 7, wherein the second AC/DC converter (35) and the DC/DC converter (37) comprise bridge circuits of semiconductor switches (43).

9. Charger (1) according to any of the claims 2 to 8, wherein the second charger unit (13) comprises
- a second DC/AC converter (39) which, in the second operation modus, converts the direct intermediate voltage (Ul) into a third internal alternating voltage (UA3),
- a matching network (41) which creates a resonance frequency for the alternating charging voltage (UA), and
- the induction coil (12) which, in the second operation modus, receives the alternating charging voltage (UA).

10. Charger (1) according to claim 9, wherein the second DC/AC converter (39) comprises bridge circuits of semiconductor switches (43).

11. Charger (1) according to any of the preceding claims, comprising a control unit configured to control the charging electronics (17).

12. Charger (1) according to claim 11, wherein the control unit executes a computer program to control the charging electronics (17).
